# EUROPEAN PATENT APPLICATION

(11) **EP 4 231 477 A1**
(43) Date of publication of application: **23.08.2023**
(21) Application number: 22382142.2
(22) Date of filing: 18.02.2022
(51) Int. Cl.: H02J 3/00, H02J 3/38, H02J 3/48

(54) **METHOD OF POWER MANAGEMENT OF A POWER PLANT**

(71) Applicant: Siemens Gamesa Renewable Energy Innovation & Technology S.L., 31621 Sarriguren (Navarra) (ES)
(72) Inventor: The designation of the inventor has not yet been filed
(74) Representative: SGRE-Association

(57) **Abstract**

The present invention relates to a method of power management of a hybrid power plant (100). Before a predefined time range, the method comprises the steps of: generating a power generation schedule (205) of the renewable power generation equipment (110) during the predefined time range on the basis of forecasts parameters (204), obtaining from a controller of the grid (141), the user (150) and/or the power conversion equipment (160) a power supply schedule (206) defining a power to be supplied to one of the electrical grid (140), the user (150) and/or the power conversion equipment (160) during the predefined time period and of determining a power injection schedule (207) of the power plant (100) defining a power supply of the power plant (100) during the predefined time range on the basis of the power generation schedule (205) and of the power supply schedule (206). During the predefined time range the method comprises the steps of supplying the power of the power plant (100) to electrical grid (140) and/or to the user (150) on the basis of the power supply schedule (206) and of supplying a surplus power of the plant (100) defined as a difference between the power injection schedule (207) and the power supply schedule (206) to one of the electrical grid (140), the user (150), the energy storage system (120) and the power conversion equipment (160).

## Description

### Field of invention

The present invention relates to a method of power management for a power plant comprising at least one type of renewable energy generation equipment and an energy storage system.

### Art Background

Power plants comprising renewable power generation equipment, such as wind turbines, lack predictability and dispatchability of power supply due to the ever changing weather conditions. This causes difficulties in providing specific power loads, also referred to as power supply schedules, during a predefined time range to either an electrical grid or to a user. The inclusion of energy storage systems, such as batteries (BESS, battery energy storage system), is used to contrast the lack of predictability and dispatchability by allowing the charge and discharge of the energy storage systems in a fast and efficient way, thus managing both the power production and the power storage towards predefined goals. To achieve this, specialized energy management systems (also referred to as EMS), based on predictive optimization algorithms and controls are implemented in order to correctly manage and control the energy and power dispatch of the plant from both the power generation equipment and the energy storage system. The energy management systems control the power supply of the power plant according to a predefined power supply schedule during the predefined time range, without the possibility of allowing more power to be supplied to the electrical grid or the user.

In the above configuration, surplus power must be therefore curtailed and/or the energy storage system permanently undergoes charging/discharging cycles, which are necessary to compensate the variable power generation from the renewable power generation equipment and/or the user's load variability.

Therefore, the power plant has not an optimal usage of the generated power due to power curtailment and/or the lifetime of the energy storage system is shortened as a consequence of the fast charging/discharging cycles.

There may therefore be the need for a method capable of not only dispatching a predefined power supply during a predefined time range, but also capable of minimizing the power curtailment, optimizing the usage of the generated power and minimize the usage of the energy storage system.

### Summary of the Invention

This need may be met by the subject matter according to the independent claims. Advantageous embodiments of the present invention are described by the dependent claims.

According to a first aspect of the invention a method of power management of a power plant is provided, wherein the power plant comprises at least one type of renewable power generation equipment, an energy storage system and at least one point of connection connecting the renewable power generation equipment and/or the energy storage system with an electrical grid and/or a user and/or a power conversion equipment.

The method comprises a first step of determining a power generation schedule defining a power generation of the renewable power generation equipment during a predefined time range on the basis of forecasts parameters. In the same step, the method also comprises obtaining from at least one of a user, a power conversion system and a controller of the grid a power supply schedule defining a power to be supplied to at least one of the user, the power conversion equipment and the electrical grid during the predefined time range. The power supply schedule might include power injection limits as required by the controller of the grid. In a second step, the method comprises determining an optimized power injection schedule of the power plant defining a power supply of the power plant during the predefined time range on the basis of the power generation schedule and of the power supply schedule. During the predefined time range, the method comprises supplying the power of the power plant to at least one of the electrical grid, the user and the power conversion equipment on the basis of the power supply schedule and supplying a surplus power of the power plant defined as a difference between the power injection schedule and the power supply schedule to at least one of the electrical grid, the user, the energy storage system and the power conversion equipment on the basis of at least one optimization parameter. Real time condition variations, for example in the weather conditions and/or in the power supply request from at least one of the electrical grid, the user and the power conversion equipment are also taken into account when determining whereto the surplus power of the power plant is supplied.

In the present application, a power plant including at least one type of renewable power generation equipment and an energy storage system is also referred to as a hybrid power plant. The terms "power plant" and "hybrid power plant" are used equally in the present application.

According to the present application, a point of connection is an electrical connection between at least a component of the power plant, either the renewable power generation equipment or the energy storage system, and at least one of an electrical grid or network, a user and a power conversion system allowing a passage of electrical energy in either direction. The point of connection also refers to the point where the commitments and power injection requirements are established and monitored.

The power plant can comprise a first point of connection connecting the renewable energy generation equipment with at least one of the electrical grid, the user and the power conversion equipment and a second point of connection connecting the energy storage system with at least one of the electrical grid, the user and the power conversion equipment. In this case, the power injection from the renewable power generation equipment and from the energy storage system is controlled separately from each other and the power plant is a so-called "co-located power plant". This is often the case when the renewable power generation equipment and the energy storage system are placed spatially apart from each other. A co-located power plant also comprises the case in which the first and the second point of connection are not placed spatially apart the one from the other, wherein the power injection and the power schedule commitments from the renewable power generation equipment and the energy storage system are determined, controlled and monitored separately the one from the other at each corresponding connection point.

It might however also be the case, that the power plant comprises one single point of connection connecting the renewable power generation equipment and the energy storage system with at least one of the electrical grid, the user and the power conversion equipment. In this case, the power injection and the power schedule commitments from the renewable power generation equipment and from the energy storage system are determined, controlled and monitored together at a single point, as a whole, and the power plant is a so-called "integrated power plant".

The energy storage system may for example comprise one or more batteries or accumulators which may store electric energy in form of chemical energy and/or mechanical energy. The renewable power generation equipment may comprise or may not comprise a converter, for example to convert a DC voltage (for example of a battery or an accumulator or a photovoltaic cell) to an AC voltage having a frequency for example corresponding to a nominal frequency (for example 50 Hz or 60 Hz) of an electrical utility grid. An energy storage system comprising only batteries is defined as battery energy storage system, also known as BESS.

In the present application, forecasts parameters are data and/or pieces of information that are being used to determine a power generation schedule and a state of charge target schedule during a predefined time range. In particular, forecasts parameters are data and/or pieces of information relating to a scenario and/or a situation during the predefined time range. For example, the forecasts parameters provide information about the weather conditions in the region of the power plant during the predefined time range. The forecast parameters are therefore external constraints which influence the operation of the power plant, in particular of the renewable power generation equipment.

The power generation schedule is defined as the power to be generated by the renewable energy generation equipment during the predefined time. For example, the power generation schedule takes into account the amount of power that can be produced by wind turbines belonging to the power plant during the predefined time range.

The power supply schedule is a power that the power plant has to dispatch during the predefined time schedule to a user connected to the power plant, to the power conversion equipment and/or to the electrical grid. For example, the power supply schedule might represent a commitment made by the owner of the power plant to a factory (that is a user), to a power conversion equipment such as an electrolizer for hydrogen production or to a controller of the grid. This commitment should be followed as close as possible during the predefined time range in order to avoid penalties and severe technical problems. The power supply schedule is a minimum power output that the power plant can guarantee during the predefined time range.

The power supply schedule can have a lower power supply limit defining a minimum power supply that has to be dispatched. The power supply schedule can also have an upper power supply limit defining a maximum power that can be dispatched. If the power supply schedule has both a lower and an upper power supply limit, then the power supply schedule is a so-called "bounded" power supply schedule. If the power supply schedule has no upper power supply limit, then the power supply schedule is a so-called "unbounded" power supply schedule.

The power injection schedule is defined as the power to be supplied by the power plant during the predefined time range. The supplied power is composed by the power generated by the renewable power generation equipment and by the power provided (or absorbed) by the energy storage system. The power injection schedule is optimized in that it considers the power generation schedule and the power supply schedule in order to define an optimal injection taking into account at least one optimization parameter, such as the minimization of power curtailment or the maximization of the lifetime of the energy storage system.

The power supply schedule can be established as a power to be delivered, to a specific consumer (user), to the power conversion equipment and/or to the electrical grid. A power conversion equipment is a type of power conversion system, which may or may not be comprised in the power plant, and which is fed with power being supplied by the power plant to generate energy in chemical, mechanical or electrical form. The power conversion equipment is preferably a hydrogen production system. That is, the power conversion equipment is used to produce hydrogen fuel by using energy coming from renewable sources, such as wind, or from the storage devices or from the grid. A hydrogen production system may comprise electrolyzers for the production of hydrogen as well as tanks for the storage of the produced hydrogen.

According to the first aspect of the present application, it is therefore possible to use surplus power to supply more power to the electrical grid and/or to the user, to charge the energy storage system and/or to feed an external or internal power conversion equipment. In such a way, surplus power is not curtailed and a high number of charge/discharge cycles of the energy storage system is avoided by determining optimized power and state of charge schedules.

The above effects are particularly advantageous when the power supply schedule is bounded and, therefore, the power supplied to at least one of the grid, the user and the power conversion equipment both has a lower and an upper limit. In this context and with methods of power management known in the art, surplus power has either to be curtailed or stored, if possible. In case the power generated by the renewable power generation equipment is too low, the energy storage system is used to cover up for the renewable power generation equipment, thus leading to a cycling of the energy storage system. According to the first aspect of the present invention it is however possible to meet the strict dispatchment requirement imposed by a bounded power supply schedule without the need of curtailing generated energy and/or unnecessary cycling the energy storage system.

According to one embodiment of the invention, it is possible that the step of supplying the surplus power to at least one of the electrical grid, the user, the power conversion equipment and the energy storage system is performed on each predefined time range, that is the optimization parameter for supplying the surplus power is updated during the predefined time range on a regular or an irregular basis.

In an embodiment of the invention, the redistribution of the surplus power to one of the electrical grid, the user, the energy storage system and the power conversion equipment is based also on the forecasts parameters. In this case, the forecasts parameters are therefore used as optimization parameters. It might be for example the case, that a surplus power is supplied during a first period in the predefined time range to the energy storage system to charge it up and the power thus stored is then used during a second period in the predefined time range to satisfy a power request from the user or the electrical grid.

As explained above, the power plant according to the present invention can be a co-located power plant or an integrated power plant. A co-located power plant is particularly advantageous if the renewable power generation equipment and the energy storage has separate electrical grid and/or market participation agreements for each. In this case, a separate management of the injection from the renewable power generation equipment and from the energy storage system is possible. A co-located power plant is also advantageous if, due to market regulations or due to lack of the predictability in the power generation, the energy storage system alone has to provide for the power supply defined in the power supply schedule. An integrated power plant is particularly advantageous if the renewable power resources are complementary, like a wind resource providing energy during the nighttime where the solar power is not available. The renewable power generation equipment and the energy storage system are considered as a single plant, and its power commitments are established for the hybrid plant as a whole.

According to an embodiment, the at least one type of renewable power generation equipment comprises at least one wind turbine and/or at least a solar panel. In this case, the method allows to compensate the effects of weather conditions on the power supply, by using, for example, exceeding power to charge the energy storage system or to feed a power conversion equipment.

Other types of renewable power generation equipment that can be comprised in the power plant include a turbine for the generation of hydroelectric power and/or a system for harvesting tidal power.

According to another embodiment, the forecasts parameters comprise weather forecast parameters, in particular wind speed, wind direction and/or sun irradiation in the region of the power plant. In particular, the weather forecasts parameters describe the weather conditions in the region of the power plant shortly before and/or during the predefined time range.

According to another embodiment, the forecasts parameters comprise financial parameters and/or a committed power injection schedule.

Financial parameters can be, for example, an energy price or a variation of an energy price in time. By considering the energy price variation over time, a financial optimization of the operation of the power plant is possible. For example, it is possible to supply more power to the electrical grid or to the user when the energy price is high and an upper bound of the power supply schedule allows it and to recharge the energy storage system or to feed the power conversion equipment when the energy price is low.

A committed power injection schedule is a power injection schedule received from a controller of the grid, from the user and/or from the power conversion equipment. The committed power injection schedule obliges the power plant to supply a predetermined amount of power to the grid during the predefined time range. The committed power injection schedule represents a minimum power supply during the predefined time range. The committed power injection schedule can have an upper limit, representing a maximum power that can be supplied. Such upper limit might be equal or might be greater than the value established in the committed power injection schedule. By taking into consideration the committed power injection schedule as a forecast parameter, a power generation schedule can be generated by taking into consideration a minimum amount that must be supplied to the electrical grid and/or to the user.

The committed power injection schedule might comprise power to be supplied from the energy storage system as well as power generated by the renewable energy generation system.

According to another embodiment, the forecasts parameters comprise a present availability of the renewable power generation equipment and/or a present value of the state of charge of the energy storage system.

In the present application, the availability of the renewable power generation equipment is defined as the renewable power generation equipment of the power plant, which can be used for generating power. It is for example possible, that part of the power generation equipment cannot be used shortly before and/or during the predefined time range, so that the power generation capacity of the renewable power generation equipment is reduced. By taking this into account, a more accurate power generation schedule, and thus a more accurate power injection schedule, can be generated.

In the present application, a state of charge of the energy storage system is a value representing the amount of charge, or available electrical energy, of the energy storage system. This value can be represented as a percentage of the total possible energy capacity, for example 80%, or as a physical value, for example in terms of Ampere-hours (Ah) or the like. By taking into account the state of charge of the energy storage system it is possible to optimize the power injection schedule in order to minimize the cycling of the energy storage system.

According to an embodiment of the invention and as described above, the power supply schedule might be bounded. This means, that the power supply schedule has a minimum power supply, defining the minimum power that must be supplied during the predefined time range, and a maximum power supply, defining a maximum power that can be supplied during the predefined time range. This might be the case if particularly strict user's power supply conditions or market and grid regulations must be observed. In this case, the method according to the invention is particularly advantageous, as it allows the surplus power to be supplied, for example, to a power conversion equipment or to the energy storage system for building up power reserves.

According to an embodiment of the invention, the method further comprises determining a state of charge target schedule of the energy storage system during the predefined time range on the basis of the forecasts parameters, wherein the power injection schedule is determined also on the basis of the state of charge target schedule. In the present application, a state of charge target is a target value within the schedule that has to be reached or maintained. This target value can be expressed in percentage of the total possible energy storage capacity, such as 80% of the maximum capacity, of the energy storage system or as a physical value in Ah or the like. The state of charge target is chosen in such a way, that the lifetime of the energy storage system can be prolonged and the charging and discharging cycles of the energy storage system are minimized as much as possible while attempting to provide the committed power supply schedule.

By determining the power injection schedule also on the basis of the state of charge target, it is possible to minimize the cycling of the energy storage system of the power plant, thus optimizing the lifetime of the energy storage system.

According to an embodiment, during the predefined time range, the power generation schedule and the power injection schedule are updated on the basis of updated forecasts parameters collected during the predefined time range. Accordingly, it is therefore possible to recalculate the power generation schedule and the power injection schedule during the predefined time range in order to further optimize the power management of the power plant.

According to a further embodiment, an updated power supply schedule is obtained during the predefined time range from the user, the power conversion equipment and/or from the controller of the grid. In this case, the method comprises, during the predefined time range, the step of updating the loading (power supply) schedule on the basis of at least one signal received by the controller of the grid and/or the user.

In this case, if the power generation schedule, the power supply schedule and the power injection schedule are all updated during the predefined time range, it is possible for the power plant to better react to changed external conditions, such as weather changes and/or peaks in the power demand, and better distribute the surplus power.

The updating can be performed only once during the predefined time range, for example after half of the predefined time range, or can be performed multiple times during the predetermined time range. If the updating is performed multiple times during the predetermined time range, then the updating can be performed at regular or irregular time intervals. In such a way, the power generation schedule, the power supply schedule and the power injection schedule are adapted to mutating external conditions, such as the weather and/or the energy pricing, in a frequent and constant manner. Therefore, the forecasts parameters should be updated as often as possible during the predefined time range, in order to better react to variable external conditions, which influence the power generation, supply and/or the injection capabilities and/or necessities.

According to yet another embodiment of the invention, the method further comprises the step of regulating, through power control loop signals indicating power setpoints, up to totally activating and/or deactivating at least a part of the renewable power generation equipment of the power plant. This is advantageous as it reduces the need of curtailing generated power or unnecessarily cycling the energy storage system.

According to a second aspect of the invention, an arrangement for managing a power plant is provided, wherein the power plant comprises at least one type of renewable power generation equipment, an energy storage system, a point of connection connecting the renewable power generation equipment and/or the energy storage system with at least one of an electrical grid, a user and a power conversion equipment. The arrangement comprises an energy management system (EMS) and a local plant controller. The energy management system is configured to determine an optimized power generation schedule defining a power generation of the renewable power generation equipment during a predefined time range on the basis of forecasts parameters, to obtain a power supply schedule from at least one of a controller of the grid, the user and the power conversion equipment defining a power to be supplied to at least one of the electrical grid, the user and the power conversion equipment, to determine an optimized power injection schedule of the power plant defining a power supply of the power plant during the predefined time range on the basis of the power generation schedule and of the power supply schedule. The local plant controller is configured to, during the predefined time range, supply power to at least one of the electrical grid, the user and the power conversion equipment on the basis of the power supply schedule and to supply in real time a surplus power of the power plant, defined as a difference between the power injection schedule and the power supply schedule, to at least one of the electrical grid, the user, the energy storage system and a power conversion equipment on the basis of an optimization parameter. The local plant controller takes into consideration real time condition variations, for example in the weather conditions and/or in the power supply request from at least one of the electrical grid, the user and the power conversion equipment, when determining whereto the surplus power of the power plant is supplied.

According to a third aspect of the invention, a power plant is provided with at least an arrangement as described above.

It is noted, that the arrangement according to the second aspect of the present invention may include any of the features disclosed in the method according to the first aspect of the invention and that, vice versa, the method according to the first aspect of the invention may include any of the features disclosed in the arrangement according to the second aspect of the invention.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawing

Figure 1 shows a power plant according to an embodiment of the present invention.
Figure 2 shows an arrangement according to an embodiment of the present invention.
Figure 3 shows, schematically, a method of power management according to an embodiment of the present invention.

### Detailed Description

The illustration in the drawing is schematically. It is noted that in different figures, similar or identical elements are provided with the same reference signs or with reference signs, which are different from the corresponding reference signs only within the first digit.

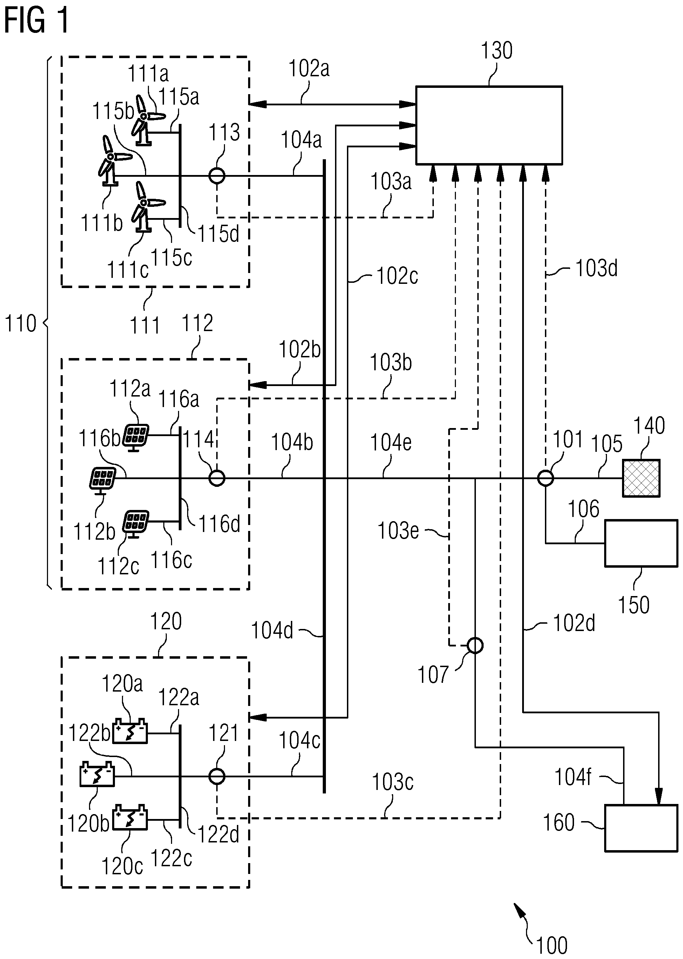

**Figure 1** shows a power plant 100 according to an embodiment of the present invention. The power plant 100 comprises renewable power generation equipment 110, an energy storage system 120, an arrangement 130 for managing the power plant 100 and a power conversion equipment 160, such a green hydrogen production system. The power plant 100 is connected to an electrical grid or network 140, to a user, such as a factory, 150 and/or to a power conversion equipment 160. In this embodiment, therefore, the power conversion equipment 160 is internal to the power plant 100. It can however also be the case that the power conversion equipment is external to the power plant. The power plant 100 is connected to the electrical grid 140 and to the user 150via a point of connection 101. In the present embodiment, there is only one point of connection 101 and the power plant 100 is an integrated one. It can however be the case, that the power plant 100 is co-located and that there is a first and a second point of connection connecting respectively the renewable power generation equipment 110 and the energy storage system 120 to the electrical grid 140 and/or the user 150. The power plant 100 is also connected to the power conversion equipment 160 via a power conversion equipment point of connection 107.

In the present embodiment, the renewable power generation equipment 110 is of two types: on the one side there are wind turbines 111a, 111b, 111c forming a wind power park 111 and on the other side there are solar panels 112a, 112b, 112c forming a solar energy park 112.

The wind turbines 111a, 111b, 111c are electrically connected via power lines 115a, 115b, 115c respectively to a power line 115d and through the power line 115d to a wind power point of connection 113, which electrically connects the wind turbines 111a, 111b, 111c to the power lines 104a, 104d, 104e and through these to the point of connection 101, so that the electrical energy produced in the wind power park 111 can be distributed to the electrical grid 140,to the user 150 and/or to a power conversion equipment 160 via power lines and points of connection 105, 106 and 107 respectively.

In a similar fashion, the solar panels 112a, 112b, 112c are electrically connected via power lines 116a, 116b, 116c respectively to a power line 116d and through the power line 116d to a solar power point of connection 114, which electrically connects the solar panels 112a, 112b, 112c to the power lines 104b, 104d, 104e and through these to the point of connection 101, so that the electrical energy produced in the solar energy park 112 can be distributed to the electrical grid 140, to the user 150 and/or to a power conversion equipment 160 via power lines and points of connection 105, 106 and 107 respectively.

The energy storage system 120 comprises a number of batteries 120a, 120b, 120c. These are electrically connected via power lines 122a, 122b, 122c to a power line 122d and through this to an energy storage system point of connection 121. The energy storage system point of connection 121 connects the energy storage system 120 with power lines 104c, 104d of the power plant 100. When the batteries are being discharged, power is supplied from the energy storage system 120 through the energy storage system point of connection 121 to the power lines 104c, 104d, 104e and through these to the point of connection 101 and finally to the grid 140 or the user 150, or to the power conversion equipment 160 through the power conversion equipment point of connection 107. When the batteries are being charged, then power is supplied from the wind power park 111 and/or the solar energy park 112 through power lines 104d, 104c to the energy storage system point of connection 121 and through this to the power lines connecting the energy storage system point of connection 121 with the batteries 120a, 120b and 120c for charging them. The energy storage system 120 can also be charged from the grid 140 through the point of connection 101 and the power lines 104e, 104d and 104c.

The power conversion equipment 160 is connected via a power line 104f to the power line 104e, so that the power from the energy storage system 120, from the grid 140 and/or from the renewable power generation equipment 110 can be supplied to the power conversion equipment 160 via the power lines 104e, 104f and the power conversion equipment point of connection 107.

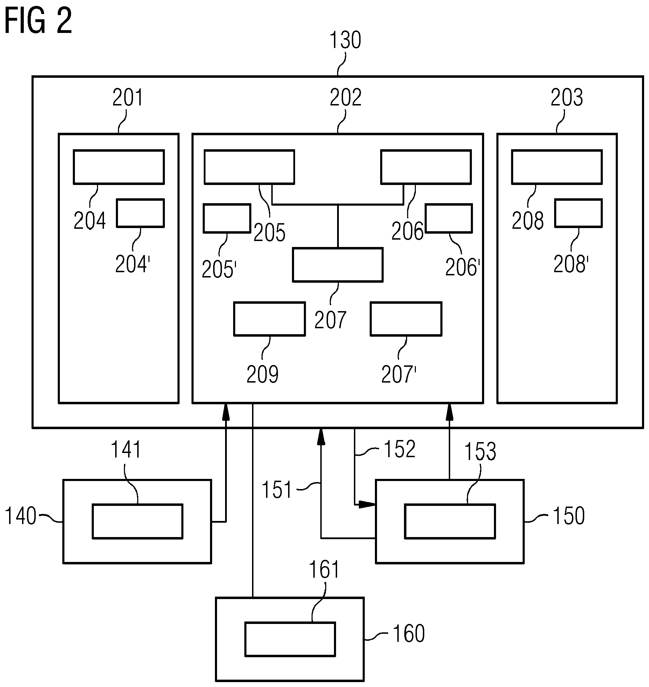

The arrangement 130, which is described in detail in **Figure 2,** controls via a feedback and regulation loop, represented by the lines 102a, 102b, 102c, 102d, the wind power park 111, the solar energy park 112, the energy storage system 120 and the power conversion equipment 160. In particular, each of these components of the power plant 100 are separately controlled and regulated by the arrangement 100. In particular, the arrangement 130 is configured to regulate up to totally connect or disconnect any of the wind turbines 111a, 111b, 111c and/or solar panels 112a, 112b, 112c.

The arrangement 130 is also configured to control the whole wind power park 111 and/or the whole solar energy park 112 by regulating the power flow through the wind power point of connection 113 and/or through the solar power point of connection 114, by using reference power setpoint signals. To control the wind power point of connection 113 and the solar power point of connection 114, dedicated signal lines 103a and 103b are provided.

Furthermore, the arrangement 130 is configured to control the energy storage system 120. If the energy storage system 120 is connected, then the batteries 120a, 120b, 120c can either be charged or discharged, depending on the settings provided by the arrangement 130 for controlling the energy storage system point of connection 121. The arrangement 130 controls the energy storage system point of connection 121 via a dedicated signal line 103c. It might also be the case, that one or more batteries are connected and one or more are disconnected, so that the batteries 120a, 120b, 120c can be controlled separately by the arrangement 130. Also, the arrangement 130 is configured to control the point of connection 101 via a dedicated signal line 103d.

Finally, the arrangement 130 is also configured to control, connect or disconnect the power conversion equipment 160 by controlling the power conversion equipment point of connection 107 via a dedicated signal line 103e.

It is herewith specified, that each of the points of connection 101, 107, 113, 114, 121 are not only the points where energy is transferred, and possible commitments are set, but are also the points where measurements are taken.

From **Figure 1****,** as well as from the following **Figure 2****,** it is clear, how the arrangement 130 controls power plant 100 to optimize the use of the surplus power being supplied during the predefined time range in order to minimize the power curtailment and optimize the usage of the energy storage system 120.

**Figure 2** shows the arrangement 130 in a detailed manner. The arrangement 130 comprises a forecast service system 201, an energy management system 202 and a local plant controller 203.

The forecast service system 201 retrieves forecasts parameters 204, such as weather forecast data, from sources which are external to the arrangement 130, such as forecasts service providers. The forecasts parameters 204 are then passed to the energy management system 202. The forecasts parameters can also comprise, for example, a committed power schedule 153, which has to be delivered by the user 150. The committed power schedule 153 is transmitted to the arrangement 130 via a signal line 151 and accepted by the arrangement 130 via a signal line 152. A parameter can also be a committed power schedule received from a controller 141 of the electrical grid 140 or a committed power schedule 161 from the power conversion equipment 160.

The energy management system 202 is configured to, on the basis of the forecasts parameters 204, determine a power generation schedule 205 of the power plant 100 during a predefined time range. The power generation schedule 205 can also take into consideration that not all of the components of the renewable power generation equipment 110 are switched on or connected during the predefined time range. This can for example be convenient, when peak powers are produced, due to extreme weather conditions, and it is more convenient to disconnect a wind turbine or a solar panel, rather than curtail the produced power.

The energy management system 202 is also configured to obtain a power supply schedule from the user 150, and/or from the controller of the grid 141 and/or from the power conversion equipment 160 defining a power that must be supplied to the electrical grid 140, to the user 150 and/or to the power conversion equipment 160 during the predefined time range. The power supply schedule 206 might be bounded, that is it might have an upper and a lower limit of the power that can be supplied to the electrical grid 140, to the user 150 and/or to the power conversion equipment 160 during the predefined time range. The power supply schedule 206 might also have only a lower limit.

Furthermore, the energy management system 202 also determines a power injection schedule 207 of the power plant 100 during the predefined time range on the basis of the power generation schedule 205 and the power supply schedule 206. The power injection schedule 207 defines the power supplied by the power plant 100 during the predefined time range.

In an embodiment, the energy management system 202 determines the power injection schedule 207 also on the basis of a state of charge target schedule 209, which defines a state of charge of the energy storage system 120 to be achieved or maintained during the predefined time range. In such a way, the lifetime of the energy storage system 120 can be optimized under consideration of the power supply schedule 206. The state of charge target schedule 209 can be determined by the energy management system 202 on the basis of the forecasts parameters 204, so that mutating weather conditions can be taken into consideration when planning the power injection during the predefined time range.

The energy management system 202 then transmits both the power supply schedule 206 and the power injection schedule 207 to the local plant controller 203. The local plant controller 203 is configured to operate the power plant 100 such that the power defined in the power supply schedule 206 is delivered to the user 150, to the power conversion equipment 160 and/or to the electrical grid 140. The surplus power, defined as the difference between the power injection schedule 207 and the power supply schedule 206, can be distributed to at least one of the electrical grid 140, the user 150, the energy storage system 120 and the power conversion equipment 160.

The local plant controller 203 is configured to redistribute the surplus power according to a surplus power schedule 208, which is optimized in real time condition on the basis of at least an optimization parameter. The surplus power schedule 208 defines how much of the surplus power is to be used for charging the energy storage system 120, how much has to be distributed to the electrical grid 140 and/or to the user 150 and how much has to be used for feeding the power conversion equipment 160. The surplus power schedule 208 can be determined on the basis of the forecasts parameters 204, so that environmental, economical and/or regulation factors are taken into account.

The local plant controller 203 will preferably distribute the surplus power to the energy storage system 120 or to the power conversion equipment 160 if the power supply schedule 206 is bounded and the generated power exceeds the upper limit. On the contrary, the local plant controller 203 will preferably distribute the surplus power to the electrical grid 140 and/or to the user 150 if the power supply schedule 206 is not bounded.

The local plant controller 203 may however also distribute the surplus power according to the state of charge target schedule 209, which was determined in order to minimize the cycling of the energy storage system 120 and to optimize its lifetime.

It is therefore clear, how the arrangement is configured to control the power injection to the electrical grid 140, to the user and/or to the power conversion equipment 160 and the redistribution of the surplus power in order to meet on the one side the power supply schedule and on the other side to optimize the managing of the power plant 100 by taking into consideration, for example, the profitability of the power plant 100 and/or the lifetime of the energy storage system 120.

The energy management system 202 can also be configured to retrieve, during the predefined time range, updated forecasts parameters 204' from the forecast service system 201 and/or an updated power supply schedule 206' from the controller of the grid 141, from the user 150 and/or from the power conversion equipment 160. On the basis of the updated forecasts parameters 204', the energy management system can update the power generation schedule 205 and thus the power injection schedule 207. The updated power supply schedule 206'and the updated power injection schedule 207' are transmitted to the local plant controller 203, which uses them to update the real time controlling of the power plant 100 by taking into consideration changed external conditions influencing the power generation and/or supply. The surplus power schedule 208 can also be updated (updated surplus power schedule 208') .

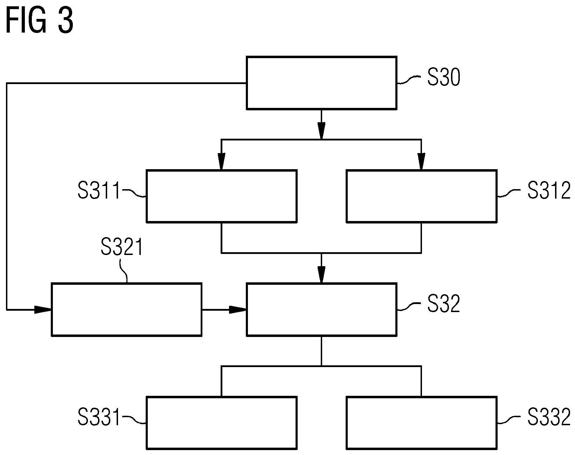

**Figure 3** shows, schematically, a method of power management of the power plant 100 according to the invention.

In a first step S30 forecasts parameters 204 are collected from the forecast service system 201.

The forecasts parameters 204 can be of different types. It is for example possible, that the forecasts parameters 204 are weather forecasts data for the region in which the power plant 100 is situated. For example, the forecasts parameter 204 can relate to wind speed, wind direction, precipitations and/or solar irradiation. If the renewable power generation equipment 110 comprises a system for harvesting tidal energy, the forecasts parameters 204 can also provide information about the tides.

The forecasts parameters 204 can however also relate to financial data, such as the energy price, and/or to parameters providing information about the energy market, such as a requested power supply or a power injection schedule, that the operator of the power plant 100 committed to a controller of the grid 141, to a user 150 and/or to a power conversion equipment 160.

Also, the forecasts parameters 204 can provide information about the power plant 100. In particular, the forecasts parameters 204 can relate to the state of charge of the energy storage system 120 and/or to the availability of one or more parts of the renewable power generation equipment 110.

The forecasts parameters 204 can relate to a present time range. It is however preferable, that the forecasts parameters 204 relate to information during the predefined time range.

In a second step S311, the energy management system 202 generates a power generation schedule 205 on the basis of the forecasts parameters 204 for the predefined time range. At the same time, in a parallel step S312, the energy management system obtains a power supply schedule 206 from at least one of the power conversion equipment 160, the user 150 and the controller of the grid 141.

In a third step S32, the energy management system 202 determines a power injection schedule 207 on the basis of the power generation schedule 205 and on the basis of the power supply schedule 206.

In an embodiment, the power injection schedule 207 is determined also on the basis of a state of charge target schedule 209, which is determined by the energy management system 202 by using optimization calculations on the basis of the forecasts parameters 204.

In a final step, the local plant controller 203 controls, in real time, the supply of the power to the electrical grid 140, to the user 150 and/or to the power conversion equipment 160 on the basis of the power supply schedule 206 (step S331) and controls the supply of the surplus power to at least one of the electrical grid 140, the user 150, the energy storage system 120 and the power conversion equipment 160 (step S332) .

The control of the supply to the surplus power can be performed on the basis of the forecasts parameters 204, so that, for example, the energy storage system 120 can be charged during a period in which there is production surplus of the renewable power generation equipment due to favorable weather conditions.

According to an embodiment of the invention, during the predefined time period, updated forecasts parameters 204' are collected by the forecast service system 201 (step S321) and are elaborated by the energy management system 202 to update power generation schedule 205, the energy storage power schedule 206, the power injection schedule 207 and the state of charge target schedule 209.

In this case, the steps S30 to S332 are repeated.

The updated forecasts parameters 204' can be provided at regular or irregular time intervals during the predefined time range. The updated supply schedules are also informed to the user before its dispatch, indicating any expected energy deficit or available surplus.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

## Claims

1. Method of power management of a power plant (100) comprising at least one type of renewable power generation equipment (110) and an energy storage system (120), wherein the power plant (100) comprises at least one point of connection (101) connecting the renewable power generation equipment (110) and/or the energy storage system (120) with at least one of an electrical grid (140), a user (150) and a power conversion equipment (160), the method comprising:
determining a power generation schedule (205) defining a generated power of the renewable power generation equipment (110) during a predefined time range on the basis of forecasts parameters (204);
obtaining, from at least one of the user (150), the power conversion equipment (160) and a controller of the grid (141) a power supply schedule (206) defining a power to be supplied to at least one of the user (150), the power conversion equipment (160) and the electrical grid (140) during the predefined time range;
determining an optimized power injection schedule (207) of the power plant (100) defining a power supply of the power plant (100) during the predefined time range on the basis of the power generation schedule (205) and of the power supply schedule (206);
wherein in the predefined time range the method comprises:
supplying the power of the power plant (100) to at least one of the user (150), the power generation equipment (160) and the electrical grid (140) on the basis of the power supply schedule (206),
supplying a surplus power of the power plant (100) defined as a difference between the power injection schedule (207) and the power supply schedule (206), considering also real time condition variations, to at least one of the electrical grid (140), the user (150), the energy storage system (120) and the power conversion equipment (160) on the basis of at least one optimization parameter.

2. Method according to claim 1, wherein the power plant (100) comprises a first point of connection connecting the renewable power generation equipment (110) with at least one of the electrical grid (140), the user (150) and the power conversion equipment (160) and a second point of connection connecting the energy storage system (120) with at least another one of the electrical grid (140), the user (150) and the power conversion equipment (160).

3. Method according to claim 1, wherein the power plant (100) comprises one point of connection (101) connecting the renewable power generation equipment (110) and the energy storage system (120) with at least one of the electrical grid (140), the user (150) and the power conversion equipment (160).

4. Method according to any of the preceding claims, wherein the at least one type of renewable power generation equipment (110) comprises at least one of a wind turbine (111a, 111b, 111c) and a solar panel (112a, 112b, 112c).

5. Method according to any of the preceding claims, wherein the forecasts parameters (204) comprise weather forecast parameters, in particular wind speed, wind direction and/or sun irradiation in the region of the power plant (100).

6. Method according to any of the preceding claims, wherein the forecasts parameters (204) comprise financial parameters and/or a committed power injection schedule (153).

7. Method according to any of the preceding claims, wherein the forecasts parameters (204) comprise a present availability of the renewable power generation equipment (110) and/or a present value of the state of charge of the energy storage system (120).

8. Method according to one of the preceding claims, wherein the power supply schedule (206) has a minimum power supply, defining the minimum power that must be supplied during the predefined time range, and a maximum power supply, defining a maximum power that can be supplied during the predefined time range.

9. Method according to one of the preceding claims, wherein the method further comprises:
determining a state of charge target schedule (209) of the energy storage system (120) during the predefined time range on the basis of the forecasts parameters (204), wherein the power injection schedule (207) is determined also on the basis of the state of charge target schedule (209).

10. Method according to any of the preceding claims, wherein, during the predefined time range, the method further comprises:
updating the power generation schedule (205) and the power injection schedule (207) on the basis of updated forecasts parameters (204') collected during the predefined time range.

11. Method according to any of the preceding claims, wherein, during the predefined time range, the method further comprises:
updating the power supply schedule (206) on the basis of at least one signal received by the controller of the grid (140), the power conversion equipment (160) and/or the user (150) .

12. Method according to of the claims 10 or 11, wherein the updating is performed at regular or irregular time intervals.

13. Method according to any of the preceding claims, wherein, during the predefined time range, the method further comprises:
regulating, activating and/or deactivating at least a part of the renewable power generating equipment (110).

14. Arrangement (130) for managing a power plant (100), comprising at least on type of renewable power generation equipment (110), an energy storage system (120) and at least one point of connection (101) connecting the renewable power generation equipment (110) and/or the energy storage system (120) with at least one of an electrical grid (140), a user (150) and a power conversion equipment (160), the arrangement (130) comprising:
an energy management system (202) configured to:
determine a power generation schedule (205) defining a power generation of the renewable power generation equipment (110) during a predefined time range on the basis of forecasts parameters (204);
obtain from at least one of the user (150), the power conversion equipment (160) and a controller of the grid (141) a power supply schedule (206) defining a power to be supplied to at least one of the user (150), the power conversion equipment (160) and the electrical grid (140) during the predefined time range;
determine an optimized power injection schedule (207) of the power plant (100) defining a power supply of the power plant (100) during the predefined time range on the basis of the power generation schedule (205) and of the power supply schedule (206);
a local plant controller (203) configured to, during the predefined time range:
supply power to the electrical grid (140), the user (150) and/or the power conversion equipment (160) on the basis of the power supply schedule (206);
supply a surplus power of the power plant (130), defined as a difference between the power injection schedule (207) and the power supply schedule (206), also taking into account real time power resource availability variations, to at least one of the electrical grid (140), the user (150), the energy storage system (120) and the power conversion equipment (160) on the basis of at least one optimization parameter.

15. Power plant (100) comprising at least an arrangement (130) according to claim 14.
